# Europäisches Patentamt

# European Patent Office

# Office européen des brevets

(19)

(11) Veröffentlichungsnummer: **0 109 619**
**B1**

(12) **EUROPÄISCHE PATENTSCHRIFT**

(45) Veröffentlichungstag der Patentschrift:
18.05.88

(21) Anmeldenummer: 83111252.9

(22) Anmeldetag: 11.11.83

(51) Int. Cl.⁴: **D 01 D 5/20,** D 01 D 5/12,
D 04 H 3/16, H 01 M 2/14

(54) Batterieseparator und Verfahren zu seiner Herstellung.

(30) Priorität: 17.11.82 JP 202490/82

(43) Veröffentlichungstag der Anmeldung:
30.05.84 Patentblatt 84/22

(45) Bekanntmachung des Hinweises auf die Patenterteilung:
18.05.88 Patentblatt 88/20

(84) Benannte Vertragsstaaten:
CH DE FR GB LI SE

(56) Entgegenhaltungen:
FR-A-2 263 609
FR-A-2 403 651
US-A-3 849 241
US-A-4 165 352

PATENTS ABSTRACTS OF JAPAN, Band 6, Nr. 16 (E-92) 894 , 29. Januari 1982

(73) Patentinhaber: **Firma Carl Freudenberg, Höhnerweg 4, D-6940 Weinheim/Bergstrasse (DE)**

(72) Erfinder: **Tamura, Tadashi, 1139- 142, Oguchi Ryuo-cho, Gamo- gun Shiga- ken (JP)**
Erfinder: **Nakao, Etsuro, 1430- 3, Harimada- cho, Moriyama- shi Shiga- ken (JP)**
Erfinder: **Yamazaki, Hiroaki, 2-1399, Komahane Sowa- cho, Sashima- gun Ibaraki- ken (JP)**

(74) Vertreter: **Weissenfeld- Richters, Helga, Dr., Höhnerweg 2, D-6940 Weinheim/Bergstrasse (DE)**

# 0 109 619

**Beschreibung**

Die Erfindung betrifft einen Batterieseparator mit einem Gehalt an feinen und groben Faserabschnitten von Schmelzspinnfasern aus thermoplastischen Kunststoffen, bei dem die feinen Faserabschnitte einen Durchmesser von 2 bis 4 μm und die groben Faserabschnitte einen Durchmesser von 10 bis 30 μm haben und die Schmelzspinnfasern regellos zu einer Matte vereint sind, sowie ein Verfahren zu seiner Herstellung.

Aus US-A-4 165 352 ist ein Verfahren zur Herstellung eines selbsttätig verbundenen, schmelzgesponnenen Batterieseparators und ein hierbei erhaltenes Erzeugnis bekannt. Der Batterieseparator weist einen mehrlagigen Aufbau unter Verwendung von Matten aus schmelzgesponnenen, regellos gelegten und im Eigenverbund stehenden thermoplastischen Harzfasern auf. Hierbei werden wenigstens drei gesonderte Lagen aus schmelzgesponnenen thermoplastischen Fasern hergestellt, die unter Abwesenheit von gesonderten Klebstoffen unter Bildung eines zusammenhängenden, mehrlagigen Materials verbunden werden. Die äußeren Lagen haben solche Eigenschaften, daß sie steif und abriebfest sind. Die einzelnen Lagen werden mittels Wärme und/oder Wärme und Druck verbunden. Dieses Herstellungsverfahren umfaßt mehrere Schritte und ist umständlich durchzuführen.

Aus Patents Abstracts of Japan, Band 6, Nr. 16 (E-92) /894/, 29. Januar 1982 ist in Verbindung mit JP-A-56138 863 bekannt, das Flüssigkeitsaufnahmevermögen und die mechanische Festigkeit eines Batterieseparators dadurch zu verbessern, daß der Separator aus einem Vlies hergestellt wird, der aus drei Faserarten besteht. Die Durchmesser der Fasern liegen innerhalb eines vorgegebenen Bereiches zwischen 1 und 20 μm und die Verhältnisse der Durchmesser derselben sind durch einen vorbestimmten Bereich vorgegeben. Die Fasern bestehen aus einer organischen, synthetischen, hoch molekularen Verbindung, wie Polyamid, Polypropylen oder Polyacrylnitril. Die Formbeständigkeit eines solchen Batterieseparators ist dort nicht angesprochen.

Aus DE-A-25 09 823 ist ein Batterieseparator bekannt, der aus Glasfasern mit einem Durchmesser von 0,2 bis 4 μm und einer mittleren Länge von 0,6 mm, Kunstfasern mit einem Durchmesser von 5 bis 30 μm und einer mittleren Länge von 1 bis 2 mm sowie porösem, feinteiligem, kieselsäurehaltigem Material mit einer Teilchengröße von weniger als 10 μm besteht. Das Verhältnis von Glasfasern zu Kunstfasern beträgt dabei 1 : 1,5 bis 1 : 2. Das miteinander vermengte Material wird unter hohem Druck bei einer Temperatur von 110°C bis 180°C verpreßt, wobei die thermoplastischen Kunststoffasern aufschmelzen und sich miteinander verbinden. Hierdurch wird ein starrer Separator mit einer Dicke von weniger als 0,2 mm und einer Porenweite von weniger als 3 μm erhalten. Das Speichervermögen für einen Elektrolyten ist dementsprechend gering.

Eine Lithiumzelle als Beispiel einer Batterie ist zusammengesetzt aus einer Anode aus Mangandioxid oder Fluorkohlenstoff und einer Kathode aus metallischen Lithium. Ein Batterieseparator mit einem Gehalt eines organischen Elektrolyten, beispielsweise Propylencarbonat, γ-Butyrolacton oder Dimethoxyethan ist zwischen beiden angeordnet und trennt somit die Anode von der Kathode. Während der Benutzung entstehen an der Kathode Lithiumionen und bewegen sich in Richtung der Anode, wodurch sich diese zunehmend vergrößert. Der zwischen der Anode und der Kathode angeordnete Separator wird dadurch der Einwirkung einer Pressung ausgesetzt, die zu einer Verringerung seiner Dicke führt und damit zu einer Verdrängung von Elektrolytflüssigkeit, die ursprünglich im Inneren enthalten war. Eine Verminderung der Wirksamkeit der Zelle ist hiervon die Folge.

Es ist bereits bekannt, in Lithiumzellen einen Batterieseparator zu verwenden, der aus endlosen Polypropylenfilamenten besteht, welche einen Durchmesser von 10 μm oder weniger aufweisen. Dieses Separatormaterial speichert den Elektrolyten in den Zwischenräumen zwischen den feinen Filamenten und hat dadurch ein ausgezeichnetes Speichervermögen, solange es keiner besonderen Pressung ausgesetzt ist. Eine solche Pressung tritt indessen nicht nur in einer Lithiumzelle, sondern auch in anderen Batterien stets auf. Das praktisch zur Verfügung stehende Speichervolumen wird dadurch stark beeinträchtigt. Es genügt nicht den bestehenden Anforderungen.

Um diesen Nachteil zu vermeiden, ist schon vorgeschlagen worden, grobe Filamente für die Herstellung des Separatormaterials zu verwenden, beispielsweise mit einem Durchmesser von mehr als 10 μm. Die in diesem Fall vorliegende Zunahme des Durchmessers führt indessen zu einer Vergrößerung der Zwischenräume zwischen den einzelnen Filamenten, was ungünstig ist im Hinblick auf die Vermeidung der Bildung von Kurzschlußbrücken zwischen der Anode und der Kathode.

Die Erfindung zielt darauf ab, unter Überwindung der zuvor geschilderten Schwierigkeiten einen Batterieseparator bereitzustellen, der neben einem großen Speichervermögen auch eine besonders gute Formstabilität hat, sowie ein Verfahren zur Herstellung eines solchen Batterieseparators zu schaffen, das sich einfach durchführen läßt und bei dem man einen Batterieseparator von hoher Wirksamkeit erhält.

Erfindungsgemäß zeichnet sich ein Batterieseparator mit einem Gehalt an feinen und groben Faserabschnitten von Schnellspinnfasern aus thermoplastischen Kunststoffen, bei dem die feinen Faserabschnitte einen Durchmesser von 2 bis 4 μm und die groben Faserabschnitte einen Durchmesser von 10 bis 30 μm haben und die Schmelzspinnfasern regellos zu einer Matte vereint sind, dadurch aus, daß die feinen und die groben Faserabschnitte abwechselnd aufeinanderfolgende Abschnitte endloser Schmelzspinnfasern sind, und daß die feinen Faserabschnitte 30 bis 50 % und die groben Faserabschnitte 20 bis 40 % der Schmelzspinnfasern bilden, die in einem Ausschnitt der aus den Schmelzspinnfasern gebildeten Matte zu finden sind.

Der vorgeschlagene Batterieseparator besteht somit aus endlosen, kontinuierlichen Filamenten, die in aufeinanderfolgenden Abschnitten unterschiedliche Durchmesser aufweisen und die autogen verschweißt sein

2

können. Der Batterieseparator zeichnet sich dadurch neben besonders geringen Porenradien und einem großen Speichervermögen durch eine besonders gute Formstabilität aus, die gewährleistet, daß das gute Speichervermögen auch während der praktischen Benutzung stets erhalten bleibt. Diese guten Eigenschaften sind insbesondere dann zu finden, wenn die feineren und die groberen Faserabschnitte sprunghaft ineinander übergehen.

Zur Herstellung der Schmelzspinnfasern können verschiedene Kunstharze verwendet werden, beispielsweise Polypropylen, Polyethylen, Polyamid, Polyester usw. Polyethylen und Polypropylen zeichnen sich hiervon durch eine besonders gute Beständigkeit aus und werden deshalb in bezug auf eine Verwendung in Lithiumzellen bevorzugt.

Die endlosen Schmelzspinnfasern haben Abschnitte mit einem Durchmesser von 2 bis 4 µm und Abschnitte mit einem Durchmesser von 10 bis 30 µm. Erstere gewährleisten schmale Zwischenräume zwischen den einzelnen Fasern innerhalb der Matte, letztere verbessern deren Formbeständigkeit und zugleich diejenige der dünneren Abschnitte. Auch im Bereich der dünneren Abschnitte der einzelnen Filamente ist dadurch die Formbeständigkeit wesentlich besser, als wenn die Matte ausschließlich aus Filamenten eines so kleinen Durchmessers bestehen würde. Das Elektrolytspeichervermögen während der praktischen Benutzung ist daher in bezug auf solche Ausführungen wesentlich verbessert.

Eine endlose Schmelzspinnfaser hat gewöhnlich Abschnitte mit einem Durchmesser von weniger als 2 µm und Abschnitte mit einem Durchmesser von mehr als 4 µm, jedoch weniger als 10 µm sowie einige Abschnitte deren Durchmesser 30 µm erreicht. Bei der Erfindung sollen die Anteile der Abschnitte mit einem Durchmesser von 2 bis 4 µm und mit einem Durchmesser von 10 bis 30 µm 30 bis 50 % und 20 bis 40 % der insgesamt in einem Bereich der Matte vorhandenen Filamente ausmachen. Wenn der Anteil an Abschnitten mit einem Durchmesser von 2 bis 4 µm weniger als 30 % beträgt, wird es schwierig, die erforderlichen feinen Porenradien zwischen den einzelnen Filamenten zu erhalten. Wenn der Anteil 50 % erreicht, resultiert indessen eine Verminderung der Faseranteile mit einem Durchmesser von 10 bis 30 µm, was gleichbedeutend ist mit einer Verminderung der Spannkraft der Matte.

In Fällen, in denen der Anteil von Abschnitten mit einem Durchmesser von 10 bis 30 µm unter 20 % fällt, resultiert ebenfalls eine Verminderung der Spannkraft der Matte. In Fällen, in denen deren Anteil einen Faktor von 40 % überschreitet, ergibt sich indessen eine Reduzierung der Anteile aus 2 bis 4 µm dicken Faserabschnitten, was zu einer relativ groben Porenstruktur zwischen den einzelnen Faserabschnitten führt.

Der Flächenbereich des Separatormaterials, in dem die Ermittlung der anteiligen Faserlängen grobere und feinere Fasern vorgenommen werden kann, ist an sich beliebig. Zweckmäßigerweise wird jedoch ein Bereich ausgewählt, in dem wenigstens 50 Schmelzspinnfasern beobachtet und ausgemessen werden können. Ein entsprechender Bereich läßt sich beispielsweise unter dem Mikroskop leicht festlegen.

Der prozentuale Gehalt an Fasern eines bestimmten Durchmessers setzt die Anzahl dieser Fasern ins Verhältnis zur Gesamtzahl der im Beobachtungsbereich vorhandenen Fasern.

Bei Verwendung eines Batterieseparators der vorstehend angegebenen Art in einer Lithiumzelle wird kaum Elektrolytflüssigkeit aus dem Separatormaterial verdrängt, wenn dieses einer Pressung durch die wachsende Anode ausgesetzt ist. Eine konkrete Verschlechterung der Wirksamkeit ist somit nicht zu messen.

Ein Verfahren zur Herstellung eines Batterieseparators der vorstehend beschriebenen Art, bei dem Fasern mit Faserabschnitten eines Durchmessers von 2 bis 4 µm und Fasern mit Faserabschnitten eines Durchmessers von 10 bis 30 µm regellos zu einer Matte vereint werden, zur Herstellung der Fasern ein thermoplastisches Kunstharz verwendet wird, das Kunstharz erschmolzen und unter Bildung endloser Schmelzspinnfasern durch die in einer geraden Linie angeordneten Öffnungen einer Längsspinndüse ausgepreßt wird, und die so erhaltene Schar aus Schmelzspinnfasern in einem Abstand von den Mündungen der Öffnungen der beiderseitigen Einwirkung turbulenter Ströme eines Verstreckungsmediums ausgesetzt wird, zeichnet sich dadurch aus, daß der Abstand von den Mündungen der Öffnungen 0,3 bis 2,2 mm beträgt und daß die turbulenten Ströme des Verstreckungsmediums auf die Schar aus Schmelzspinnfasern derart zur Einwirkung gebracht wird, daß man aufeinanderfolgende Faserabschnitte abwechselnder Durchmesser bei den endlosen Schmelzspinnfasern erhält.

Als thermoplastisches Kunstharz kommen bevorzugt Polypropylen oder Polyäthylen zur Anwendung, weil sich diese Werkstoffe durch eine besonders gute Beständigkeit gegenüber üblichen Elektrolytflüssigkeiten auszeichnen.

Das erschmolzene Kunstharz soll möglichst mit einer Viskosität von 300 bis 500 Poise aus den Öffnungen der Längsspinndüse ausgestoßen werden. Liegt die Viskosität unterhalb von 300 Poise, dann tendieren die aus dem Kunstharz erhaltenen Schmelzspinnfasern während ihrer Verstreckung zum Brechen. Kontinuierliche Schmelzspinnfasern können daher in diesem Falle nur sehr schwierig erhalten werden. Liegt die Schmelzviskosität des Kunstharzes während des Austretens aus den Öffnungen der Längsspinndüse hingegen oberhalb von 500 Poise, dann sinkt der Mengenausstoß erheblich. Hierdurch wird die wirtschaftliche Effektivität des Verfahrens stark beeinträchtigt.

Ein besonders gutes Arbeitsergebnis läßt sich mit dem vorgeschlagenen Verfahren erzielen, wenn je Minute aus jeder Öffnung der Längsspinndüse 0,04 bis 0,3 g Kunstharz ausgepreßt und zu Schmelzspinnfasern geformt werden. Als Verstreckungsmedium kommt bevorzugt Heißluft zur Anwendung, und hiervon werden je Gramm erschmolzenen Kunstharzes etwa 40 bis 100 g benötigt. Die Geschwindigkeit wird so bemessen, daß sich am Auftreffpunkt auf die Filamentenschar turbulente Strömungen ergeben. Durch einfache Versuche lassen sich die Randbedingungen leicht ermitteln.

Die letztlich vorliegenden Schmelzspinnfasern haben in aufeinanderfolgenden Abschnitten sich zumeist sprunghaft verändernde Durchmesser. Sie werden zweckmäßig auf einem sich quer zu der Längsspinndüse bewegenden Abzugsband gesammelt und autogen verklebt. Nach der Abkühlung kann auch eine zusätzliche Verpressung vorgenommen werden.

Die Erfindung wird nachstehend unter Bezugnahme auf die beigefügte Zeichnung näher erläutert. Darin zeigt:

Figur 1 einen beispielhaften Ausschnitt aus einem erfindungsgemäßen Separatormaterial, und

Figur 2 eine Querschnittsansicht einer Längsspinndüse zur Erläuterung des Verfahrens nach der Erfindung.

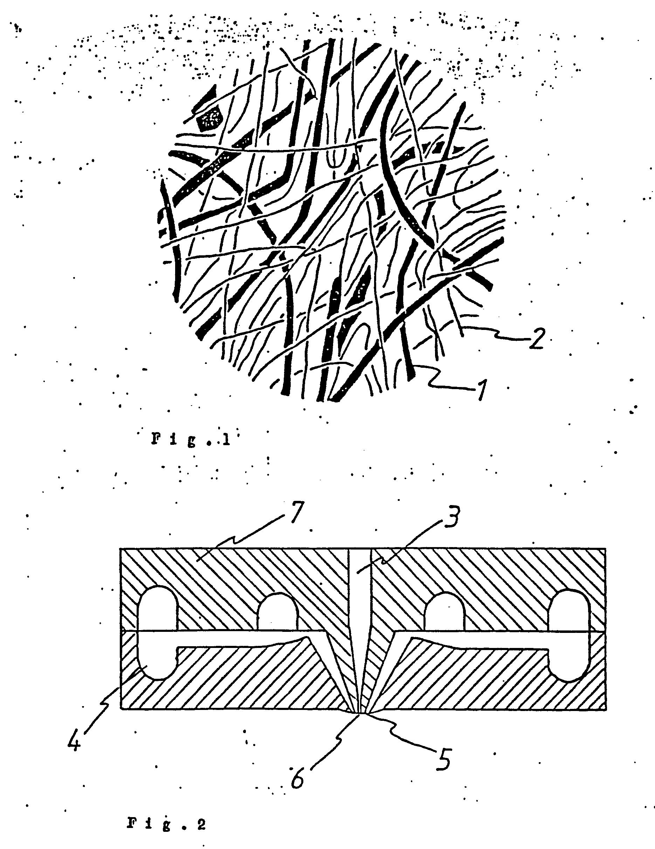

Das in Figur 1 gezeigte Separatormaterial besteht aus endlosen Schmelzspinnfasern, die Bereiche eines unterschiedlichen Durchmessers aufweisen. Die mit 1 bezeichneten Bereiche haben einen Durchmesser von 10 bis 30 µm, und die mit 2 bezeichneten Bereiche einen Durchmesser von 2 bis 4 µm.

Nach Figur 2 weist die Längsspinndüse eine Spinnöffnung 3 auf, die im rückwärtigen Bereich erweitert ist und in die unter hydraulischem Druck, beispielsweise mit Hilfe eines Extruders, erschmolzenes Kunstharz eingespeist wird, beispielsweise Polypropylen, Polyäthylen, Polyamid, Polyester oder ähnlich. Die Spinnöffnung ist im vorderen Bereich verjüngt und weist eine kreisförmig begrenzte Mündung 6 auf, die in einer Ebene mittig zwischen den beiderseits zugeordneten Mündungen 5 der Austrittsschlitze für die Verstreckungsluft angeordnet ist. Die Mündungen der Kanäle für die Verstreckungsluft bilden somit beiderseits ein durchgehendes Band, das sich senkrecht zur Zeichenebene erstreckt. Die Mündungen 6 der Austrittsöffnungen für den erschmolzenen polymeren Werkstoff sind demgegenüber kreisförmig begrenzt, und es ist eine Vielzahl derartiger Öffnungen in einer Reihe hintereinanderliegend angeordnet, die sich senkrecht zur Zeichenebene erstreckt.

Die Schmelzviskosität des verarbeiteten Kunstharzes wird so eingestellt, daß sich in der Mündung 6 ein Wert von 300 bis 500 Poise ergibt. Wird die Schmelzviskosität auf einen Wert von weniger als 300 Poise eingestellt, dann tendieren die erhaltenen Schmelzspinnfasern zum Brechen, was es schwierig macht, kontinuierliche Filamente zu erhalten. Wenn die Schmelzviskosität des verarbeiteten Kunstharzes demgegenüber 500 Poise überschreitet, dann fällt die Menge des ersponnenen Kunstharzes stark ab, wodurch die Effektivität des Verfahrens stark leidet.

Das erschmolzene Kunstharz fließt durch die Spinnöffnung 3 in Richtung der Mündung 6 und verläßt diese als Schmelzspinnfaser mit einem Durchmesser, der in etwa demjenigen der Mündungen 6 entspricht. Diese haben im Rahmen der vorliegenden Anmeldung vorzugsweise einen Durchmesser von 0,2 bis 0,4 mm.

Den kreisförmig ausgebildeten Mündungen 6 sind unter einem spitzen Winkel beiderseits die schlitzförmig ausgebildeten Mündungen 5 für die Verstreckungsluftströme zugeordnet. Der Wert des diesbezüglichen Winkels ist so bemessen, daß die Verstreckungsluftströme in einem Abstand von 0,3 bis 2,2 mm von der Mündung 6 auf die frisch ersponnenen Schmelzspinnfasern auftreffen. Die Wahl eines kleineren Abstandes ist unzweckmäßig, weil sich in diesem Falle häufige Faserbrüche ergeben. Desweiteren werden die laminar aus den Mündungen 5 austretenden Ströme des Verstreckungsmediums nicht in dem erforderlichen Maße in turbulente Ströme umgewandelt.

Im Rahmen der vorliegenden Anmeldung ist es von entscheidender Bedeutung, daß die frisch gebildeten Schmelzspinnfasern von den turbulenten Strömungen eines Verstreckungsmediums beaufschlagt werden. Der Bereich, in dem diese Beaufschlagung stattfindet, kann einen bestimmten Abstand von der Mündung 6 haben und ist abhängig von der natürlichen Expansion des Verstreckungsmediums nach dessen Austritt aus den Mündungen der Schlitze 5.

Die beiderseitige Beaufschlagung der frisch erhaltenen Schmelzspinnfasern mit einer laminaren Strömung eines Verstreckungsmediums führt demgegenüber zu einer gleichmäßigen Verstreckung und damit zu einer gleichmäßigen Verminderung des Durchmessers, während die erfindungsgemäß zur Anwendung gelangenden turbulenten Strömungen des Verstreckungsmediums zu einer unregelmäßigen Ausbildung des Faserdurchmessers führen. Endlose Schmelzspinnfasern, die in einem Bereich einen Durchmesser von 2 bis 4 µm haben und in einem anderen Bereich einen Durchmesser von 10 bis 30 µm können auf diese Weise ohne weiteres erzeugt werden.

Die turbulenten Ströme des Verstreckungsmediums sollen in einem Abstand von 0,3 bis 2,2 mm unterhalb der Mündung 6 an den frisch erhaltenen Schmelzspinnfasern angreifen. Ist der Abstand kleiner als 0,3 mm, dann werden keine kontinuierlichen Filamente erhalten, die über die Länge verteilt unterschiedliche Durchmesser haben. Ist der Abstand größer als 2,2 mm, dann ist es wegen der einsetzenden Verfestigung des erschmolzenen Kunstharzes schwierig, die Verstreckung und Durchmesserverminderung im erforderlichen Maße zu erzielen.

Die Verstreckungsgeschwindigkeit der ersponnenen Fasern variiert in Abhängigkeit von der Viskosität des Kunstharzes in der Mündung 6 sowie in Abhängigkeit von der Menge des zugeführten Verstreckungsmediums. Das erschmolzene Kunstharz wird bei dem vorgeschlagenen Verfahren vorzugsweise in einer Menge von 0,04 bis 0,3 g/Minute und Öffnung aus der Längsspinndüse ausgepreßt, was vor allem dann vorteilhaft ist, wenn die Schmelzviskosität des verarbeiteten Kunstharzes in der Düsenöffnung 300 bis 500 Poise beträgt. Beträgt die Ausstoßmenge weniger als 0,04 g/Minute und Öffnung, dann liegt die Produktionseffektivität sehr niedrig. Beträgt die Ausstoßmenge je Minute und Öffnung demgegenüber mehr als 0,3 g, dann muß die Viskosität des erschmolzenen Kunstharzes sehr stark gesenkt werden, um die Erzeugung dünner Filamentabschnitte zu ermöglichen, und in diesem Falle häufen sich sowohl die Faserbrüche als auch eine Tropfenbildung in den austretenen Schmelzfasern in unerwünschtem Maße.

Das die Verstreckung bewirkende, turbulente Strömungsmedium muß sich in bezug auf das erschmolzene Kunstharz inert verhalten und darf mit diesem nicht chemisch reagieren. Die Verwendung von Stickstoff oder Wasserdampf ist möglich. Insbesondere wird jedoch der Verwendung von erhitzter Luft der Vorzug gegeben, was eine nachteilige Veränderung der Eigenschaften des erschmolzenen Kunstharzes weitesgehend ausschließt. Die Menge des zugeführten Verstreckungsmediums je Gramm erschmolzenen Kunstharzes beträgt vorzugsweise 40 bis 100 g. Ist sie geringer als 40 g, dann wird die erwünschte Verdünnung und Verstreckung der frisch ersponnenen Fasern schwierig. Beträgt sie mehr als 100 g je Gramm erschmolzenen polymeren Materials, dann treten verstärkt Faserbrüche auf.

Die in Figur 2 in quergeschnittener Darstellung gezeigte Längsspinndüse hat eine sehr große Erstreckung in senkrechter Richtung zur Zeichenebene. Sie dient der Herstellung von endlosen Schmelzspinnfasern, die Bereiche unterschiedlicher Durchmesser aufweisen, und die in einer Linie nebeneinanderliegend nach unten geführt und auf einem nicht dargestellten Abzugsband gesammelt werden. Das Abzugsband bewegt sich kontinuierlich quer zur Zeichenebene und hat eine Breite, die der Breite der Längsspinndüse entspricht. Die Abzugsgeschwindigkeit ist kleiner als die Ablagegeschwindigkeit der Schmelzspinnfasern, wodurch sich diese während der Ablage schleifenartig übereinanderlegen und verwirren und in Abhängigkeit von der Abzugsgeschwindigkeit eine Matte der gewünschten Dicke bilden. Diese kann, sofern erwünscht, anschließend noch verpreßt werden, um den Porenradius und die gegenseitigen Abstände der einzelnen Fasern weiter zu vermindern. Eine Pressung bei Raumtemperatur kann vollkommen genügen.

Nachfolgend wird der Gegenstand der vorliegenden Erfindung anhand einiger Beispiele weiter erläutert:

**Beispiel 1**

In der in Figur 2 gezeigten Längsspinndüse wird Polypropylen erschmolzen und soweit verflüssigt, daß die Schmelzviskosität 400 bis 450 Poise beträgt. Das so erschmolzene polymere Material wird anschließend aus den Mündungen 6 der Spinnöffnungen ausgepreßt, die kreisförmig begrenzt sind und einen Durchmesser von 0,3 mm aufweisen. Der polymere Werkstoff wird dabei in die Gestalt feiner Schmelzspinnfasern überführt. Diese werden der Einwirkung erhitzter Verstreckungsluftströme ausgesetzt, die über die Kammern 4 eingeleitet werden und beiderseits der Faserschar aus den Schlitzöffnungen 5 austreten. Die Abstand, in dem die Verstreckungsluftströme an den frisch ersponnenen Fasern angreifen, beträgt 0,47 mm von der Mündung 6. Je Minute und Mündung werden 0,06 g polymerer Werkstoff ausgestoßen, und die Menge der zugeführten Luft betrug 90 g je Gramm erschmolzenen polymeren Werkstoffes.

Unter den vorgeschilderten Bedingungen wurden kontinuierliche Schmelzspinnfasern erhalten, die voneinander unabhängig waren und einen gegenseitigen Abstand von 1 mm hatten. Sie wurden auf einem Drahtsieb gesammelt, bei Raumtemperatur in einem Walzwerk verpreßt, dessen Walzen mit einem Liniendruck von 50 kg/cm gegeneinander angestellt waren. Das fertige Material wurde anschließend durch Zuschneiden in die gewünschte Gestalt überführt und als Separator zwischen Anode und Kathode in einem Akkumulator eingesetzt.

Der Separator hatte ein Flächengewicht von 40 g/m$^2$ und war 0,12 mm dick. Der Anteil an Faserabschnitten mit einem Durchmesser von 2 bis 4 μm und an Faserabschnitten mit einem Durchmesser von 10 bis 30 μm betrug 45 ± 5 % und 25 ± 5 %, bezogen auf einen Abschnitt, der aus dem Material entnommen wurde.

**Beispiel 2**

Ein Separator wurde in gleicher Weise erzeugt wie unter den Bedingungen des Beispiels 1 beschrieben. Lediglich der Angriffspunkt der Verstreckungsluftströme an frisch ersponnenen Schmelzspinnfasern war verändert und betrug in diesem Falle 0,9 mm von den Mündungen 6.

Der auf diese Weise erhaltene Separator bestand aus Fasern, bei denen der Anteil der Abschnitte mit einem Durchmesser von 2 bis 4 μm und der Anteil der Abschnitte mit einem Durchmesser von 10 bis 30 μm jeweils 35 ± 5 % betrug, bezogen auf eine Kontrollfläche. Flächengewicht und Dicke dieses Separatormaterials waren identisch mit entsprechenden Werten aus Beispiel 1.

**Beispiel 3**

Die Verfahrensbedingungen wurden genauso eingestellt wie in Beispiel 1 beschrieben mit der Ausnahme, daß die Schmelzviskosität in der Spinnöffnung 3 auf einen Wert von 330 bis 380 Poise eingestellt wurde und die Ausstoßmenge je Minute und Spinnöffnung auf einen Wert von 0,13 g. Die Menge der zugeführten Luft wurde ebenfalls verändert und auf einen Wert von 50 g je Gramm erschmolzenen polymeren Werkstoffes abgesenkt, die Geschwindigkeit des Abzugsbandes wurde demgegenüber mit dem Wert 2,17 multipliziert.

Das auf diese Weise erhaltene Separatormaterial hatte ein Flächengewicht von 40 g/m$^2$ und war 0,12 mm

5

dick. Der Anteil an Abschnitten mit einem Durchmesser von 2 bis 4 μm und an Abschnitten mit einem Durchmesser von 10 bis 30 μm betrug jeweils 35 ± 5 %, bezogen auf die Meßeinheit. In der nachfolgenden Tabelle wird die Speicherkapazität der nach den Beispielen 1 bis 3 erhaltenen Separatoren für Elektrolytflüssigkeit zusammengefaßt und einem konventionellen Material gegenübergestellt.

**Tabelle 1**

|  | Elektrolyt-Speicher Kapazität | | | | |
|  | 1 Min. | 2 Min. | 3 Min. | 4 Min. | 5 Min. |
| --- | --- | --- | --- | --- | --- |
| Beispiel 1 | 58 % | 53 % | 48 % | 44 % | 44 % |
| Beispiel 2 | 60 % | 55 % | 50 % | 45 % | 45 % |
| Beispiel 3 | 60 % | 55 % | 50 % | 45 % | 45 % |
| Konventioneller Separator | 50 % | 45 % | 42 % | 39 % | 35 % |

Form und Gestalt des konventionellen Separatormaterials sowie die zu seiner Prüfung angewendete Methode werden wie folgt beschrieben:

1. Gestalt:

Das Separatormaterial bestand aus endlosen Schmelzspinnfasern aus Polypropylen, die jeweils einen Durchmesser von 7 bis 10 μm aufwiesen und die zu einer Matte von 40 g/m² und einer Dicke von 0,12 mm vereint waren.

2. Prüfmethode:

Zur Messung der Speicherfähigkeit für Elektrolytflüssigkeit wurden die Prüflinge mit einem Elektrolyten aus Propylencarbonat getränkt. Die Prüflinge wurden sodann auf eine Glasplatte aufgelegt, welche oberflächlich mit Filterpapier abgedeckt war. Auf die Oberfläche der Prüflinge wurde sodann eine weitere Schicht aus Filterpapier aufgelegt und mit einer Platte aus Acrylharz belastet, die ein Gewicht von 20 g aufwies.

Anschließend wurde in aufeinanderfolgenden Stufen in einem zeitlichen Abstand von 1, 2, 3, 4 und 5 Minuten der Restgehalt an Elektrolytflüssigkeit ermittelt und die Kapazität errechnet. Diese wird in der untenstehenden Formel in Prozenten angegeben. Je größer der Prozentsatz ist, desto besser ist die Speicherfähigkeit für Elektrolytflüssigkeit:

Speicherkapazität (%) = $\frac{W_1}{W_0} \cdot 100$

$W_1$ Restgehalt an Elektrolytflüssigkeit nach 1, 2 ... 5 Minuten.

$W_0$ ursprünglicher Gehalt an Elektrolytflüssigkeit.

**Patentansprüche**

1. Batterieseparator mit einem Gehalt an feinen und groben Faserabschnitten von Schmelzspinnfasern aus thermoplastischen Kunststoffen, bei dem die feinen Faserabschnitte einen Durchmesser von 2 bis 4 μm und die groben Faserabschnitte einen Durchmesser von 10 bis 30 μm haben und die Schmelzspinnfasern regellos zu einer Matte vereint sind, dadurch gekennzeichnet, daß die feinen und die groben Faserabschnitte abwechselnd aufeinanderfolgende Abschnitte endloser Schmelzspinnfasern sind, und daß die feinen Faserabschnitte 30 bis 50 % und die groben Faserabschnitte 20 bis 40 % der Schmelzspinnfasern bilden, die in einem Ausschnitt der aus den Schmelzspinnfasern gebildeten Matte zu finden sind.

2. Batterieseparator nach Anspruch 1, dadurch gekennzeichnet, daß die feinen und die groben Faserabschnitte einer jeden Schmelzspinnfaser sprunghaft ineinander übergehen.

3. Batterieseparator nach Anspruch 2, dadurch gekennzeichnet, daß die Schmelzspinnfasern autogen verschweißt sind.

4. Verfahren zur Herstellung eines Batterieseparators, bei dem Fasern mit Faserabschnitten eines Durchmessers von 2 bis 4 μm und Fasern mit Faserabschnitten eines Durchmessers von 10 bis 30 μm regellos zu einer Matte vereint werden, zur Herstellung der Fasern ein thermoplastisches Kunstharz verwendet wird, das Kunstharz erschmolzen und unter Bildung endloser Schmelzspinnfasern durch die in einer geraden Linie angeordneten Öffnungen einer Längsspinndüse ausgepreßt wird, und die so erhaltene Schar aus Schmelzspinnfasern in einem Abstand von den Mündungen der Öffnungen der beiderseitigen Einwirkung turbulenter Ströme eines Verstreckungsmediums ausgesetzt wird, dadurch gekennzeichnet, daß der Abstand von den Mündungen der Öffnungen 0,3 bis 2,2 mm beträgt und daß die turbulenten Ströme des Verstreckungsmediums auf die Schar aus Schmelzspinnfasern derart zur Einwirkung gebracht wird, daß man aufeinanderfolgende Faserabschnitte abwechselnder Durchmesser bei den endlosen Schmelzspinnfasern erhält.

5. Verfahren nach Anspruch 4, dadurch gekennzeichnet, daß als thermoplastisches Kunstharz Polypropylen oder Polyethylen verwendet wird.

6. Verfahren nach Anspruch 4, dadurch gekennzeichnet, daß das erschmolzene Kunstharz mit einer Viskosität von 300 bis 500 Poise aus den Öffnungen ausgepreßt wird.

7. Verfahren nach Anspruch 4 oder 6, dadurch <u>gekennzeichnet</u>, daß aus der Längsspinndüse je Öffnung und Minute 0,04 bis 0,3 g Kunstharz ausgepreßt werden.

8. Verfahren nach Anspruch 4, dadurch <u>gekennzeichnet</u>, daß als turbulentes Verstreckungsmedium turbulente Heißluftströme verwendet werden.

9. Verfahren nach Anspruch 8, dadurch <u>gekennzeichnet</u>, daß für jeweils 1 g erschmolzenen Kunstharzes 40 bis 100 g Heißluft als Verstreckungsmedium verwendet wird.

10. Verfahren nach Anspruch 4, dadurch <u>gekennzeichnet</u>, daß die aus den endlosen Schmelzspinnfasern gebildete Matte bei Raumtemperatur verdichtet wird.

11. Verfahren nach einem der Ansprüche 4 bis 10, dadurch <u>gekennzeichnet</u>, daß die zu einer Matte vereinten Schmelzspinnfasern verklebt werden.


## Claims

1. A battery separator containing fine and coarse fibre sections of melt-spun fibres from thermoplastic synthetic materials, wherein the fine fibre sections have a diameter from 2 to 4 μm and the coarse fibre sections have a diameter from 10 to 30 μm and the melt-spun fibres have been combined randomly to form a mat, characterized in that the fine and coarse fibre sections are alternatingly successive sections of continuous melt-spun fibres and that the fine fibre sections form from 30 to 50 % and the coarse fibre sections from 20 to 40 % of the melt-spun fibres to be found in any sector of the mat formed from the melt-spun fibres.

2. A battery separator according to claim 1, characterized in that the fine and the coarse fibre sections on any one melt-spun fibre change abruptly from one to the other.

3. A battery separator according to claim 2, characterized in that the melt-spun fibres have been autogeneously welded together.

4. A process for producing a battery separator wherein fibres having fibre sections of a diameter from 2 to 4 μm and fibres having fibre sections of a diameter from 10 to 30 μm are randomly combined to form a mat, a thermoplastic synthetic resin is used for producing the fibres, the synthetic resin is melted and forced through the orifices of a longitudinal spinning die which are arranged in a straight line to form continuous melt-spun fibres, and the bundle of melt-spun fibres thus obtained is subjected at a distance from the mouths of the orifices to the action on both sides of turbulent flows of a drawing medium, characterized in that the distance of the mouths of the orifices is from 0.3 to 2.2 mm and in that the turbulent flows of the drawing medium is [sic] brought into action on the bundle of melt-spun fibres in such a way that successive fibre sections of alternating diameters are obtained on the continuous melt-spun fibres.

5. A process according to claim 4, characterized in that the thermoplastic synthetic resin used is polypropylene or polyethylene.

6. A process according to claim 4, characterized in that the molten synthetic resin is forced out of the orifices at a viscosity from 300 to 500 poise.

7. A process according to claim 4 or 6, characterized in that from 0.04 to 0.3 g of synthetic resin is forced out of the longitudinal spinning die per orifice per minute.

8. A process according to claim 4, characterized in that the turbulent drawing medium used comprises turbulent hot-air flows.

9. A process according to claim 8, characterized in that from 40 to 100 g of hot air are used as drawing medium for every 1 g of molten synthetic resin.

10. A process according to claim 4, characterized in that the mat formed from the continuous melt-spun fibres is compacted at room temperature.

11. A process according to any of claims 4 to 10, characterized in that the melt-spun fibres combine to form a mat are adhesively bonded together.


## Revendications

1. Séparateur de batterie contenant de fins et de gros morceaux de fibres filées par extrusion en matières synthétiques thermoplastiques, séparateur dans lequel les fins morceaux de fibres ont un diamètre de 2 à 4 μm, tandis que les gros morceaux de fibres ont un diamètre de 10 à 30 μm, les fibres filées par extrusion étant réunies irrégulièrement en un mat, <u>caractérisé en ce que</u> les fins et les gros morceaux de fibres sont des morceaux de fibres sans fin filées par extrusion, se succédant alternativement et en ce que les fins et les gros morceaux de fibres représentent respectivement 30 à 50 % et 20 à 40 % des fibres filées par extrusion que l'on doit trouver dans une découpure du mat formé à partir des fibres filées par extrusion.

2. Séparateur de batterie selon la revendication 1, <u>caractérisé en ce que</u> les fins et les gros morceaux de chacune des fibres filées par extrusion viennent se confondre l'un dans l'autre de manière versatile.

3. Séparateur de batterie selon la revendication 2, <u>caractérisé en ce que</u> les fibres filées par extrusion sont soudées par voie autogène.

4. Procédé de fabrication d'un séparateur de batterie, dans lequel des fibres en morceaux d'un diamètre de 2

à 4 μm et des fibres en morceaux d'un diamètre de 10 à 30 μm sont réunies de manière irrégulière en un mat tandis que, pour la fabrication des fibres, on utilise une résine synthétique thermoplastique que l'on fait fondre et que l'on exprime, avec formation de fibres sans fin filées par extrusion, à travers les ouvertures disposées en ligne droite et pratiquées dans une fulière longitudinale, le groupe ainsi obtenu de fibres filées par extrusion étant exposé, à l'écart des embouchures des ouvertures, à l'action bilatérale de courants turbulents d'un milieu d'étirage, caractérisé en ce que l'écartement entre les embouchures des ouvertures est de 0,3 à 2,2 mm, tandis que les courants turbulents du milieu d'étirage sont amenés à agir sur le groupe de fibres filées par extrusion de façon à obtenir des morceaux successifs de fibres de diamètres variables dans les fibres sans fin filées par extrusion.

5. Procédé selon la revendication 4, caractérisé en ce que, comme résine synthétique thermoplastique, on utilise le polypropylène ou le polyéthylène.

6. Procédé selon la revendication 4, caractérisé en ce que la résine synthétique fondue d'une viscosité de 300 à 500 poises est exprimée hors des ouvertures.

7. Procédé selon la revendication 4 ou 6, caractérisé en ce qu' on exprime, par ouverture et par minute, 0,04 à 0,3 g de résine synthétique hors de la filière longitudinale.

8. Procédé selon la revendication 4, caractérisé en ce que, comme milieu d'étirage turbulent, on utilise des courants turbulents d'air chaud.

8. Procédé selon la revendication 8, caractérisé en ce que, par gramme de résine synthétique fondue, on utilise 40 à 100 g d'air chaud comme milieu d'étirage.

10. Procédé selon la revendication 4, caractérisé en ce que le mat formé à partir des fibres sans fin filées par extrusion est densifié à la température ambiante.

11. Procédé selon les revendications 4 à 10, caractérisé en ce que les fibres filées par extrusion et réunies en un mat sont collées.

Fig.1

Fig.2